Europäisches Patentamt

European Patent Office

Office européen des brevets

(11) Publication number: **0 265 008 B1**

# EUROPEAN PATENT SPECIFICATION

(45) Date of publication of the patent specification: **05.12.90**

(21) Application number: **87201948.4**

(22) Date of filing: **09.10.87**

(51) Int. Cl.⁵: **A47J 31/40, G07F 13/02**

(54) Device for delivering hot water with volume correction facility.

(30) Priority: **10.10.86  NL 8602557**

(43) Date of publication of application:
**27.04.88 Bulletin 88/17**

(45) Publication of the grant of the patent:
**05.12.90 Bulletin 90/49**

(84) Designated Contracting States:
**CH DE GB LI NL**

(56) References cited:
**DE-A- 3 205 719**
**FR-A- 1 567 342**
**NL-A- 8 400 492**

(73) Proprietor: **VERHEIJEN B.V.,**
**Pascalstraat 20 Postbus 188, NL-1700 AD**
**Heerhugowaard(NL)**

(72) Inventor: **Kroon, Arie, Zakedijkje 34, NL-1862 HB**
**Bergen(NL)**

(74) Representative: **van der Beek, George Frans, Ir. et al,**
**Nederlandsch Octrooibureau Scheveningseweg 82 P.O.**
**Box 29720, NL-2502 LS 's-Gravenhage(NL)**

## Description

The invention relates to a device for delivering hot water in batches, provided with a water tank which can be connected via an intake pipe with intake valve to the water supply and via a di$charge pipe is connected to the input of a continuous-flow heating unit, the output of which is connected to a riser which extends to the water delivery point, a minimum and a maximum level probe in the water tank, a selector unit for selecting a number of batches and a control unit which, in response to signals delivered by the probes and the selector unit, delivers control signals to the continuous-flow heating system for switching the latter on and off cyclically and delivers control signals to the intake valve in order to open the intake valve when the minimum level is reached, to close it when the maximum level is reached and then, if the number of batches selected has not yet been reached, to open the intake valve again.

Such a device is known from the Dutch Patent 158,067. In such a device, the quantity of water per batch which is delivered is defined by the level difference between the minimum and maximum level probe. A modification of the quantity of water per batch and, consequently, of the total quantity of water to be delivered is possible only by changing the position of at least one of the probes in a manner such that the level difference changes. This requires, however, an adjustable embodiment of the probes or a mechanical intervention in the apparatus, which is expensive or cumbersome and in general is considered as disadvantageous.

On the other hand, some users regularly require a total quantity of water which cannot correctly be delivered with a defined number of batches. There is therefore a need for a facility for the total quantity of water delivered to be capable of correction in a simple manner by the user without an alteration having to be carried out in the position of the level probes.

This need is met, according to the invention, in a device of the type according to the first part of claim 1 in that the control unit is provided with a timer having time adjustment means with which, at least in the case of one of the batches, the delivery of control signals by the control unit is delayed over an adjustable period after one of the probes has been reached.

By delaying the delivery of a closed signal to the intake valve when the maximum level probe is reached, the quantity of water in the batch concerned will be increased. Said delay can occur both in a single batch (for example the last batch) and also be maintained in the case of each batch. It will be clear that in the last case, as a result of cumulative action, an appreciable correction to the total quantity of water is possible.

The filling of the water tank, however, takes place relatively rapidly because, in general, the output of the intake valve will be relatively large. This implies that for a small correction of the quantity of water in a batch, a very small period of time has to be measured. In addition there must be present still sufficient space in the water tank above the maximum level probe for a relatively large correction, which is usually not the case.

It is therefore preferable to lengthen the period in which each batch of hot water is delivered in the case of one or more batches. For this purpose, except after the last batch, the "open" signal to the intake valve can be delayed so that, after the minimum level probe is passed, the delivery is continued and the intake valve is opened only at a level below the minimum level probe in order to fill the tank again for the subsequent batch. In the case of the last batch, the delivery can be continued by delaying the switch-off signal to the continuous-flow heating system.

If the device is provided with a so-called boil-dry safety device in the form of a third probe at a third level under the said minimum level, then it is preferable to cause the operation of the time unit to terminate on reaching said third level, in other words, when said third level is reached, the intake tap will be opened regardless of the selected delay period or the continuous-flow heating system will be switched off without delay.

The invention will now be explained in more detail on the basis of the accompanying figures.

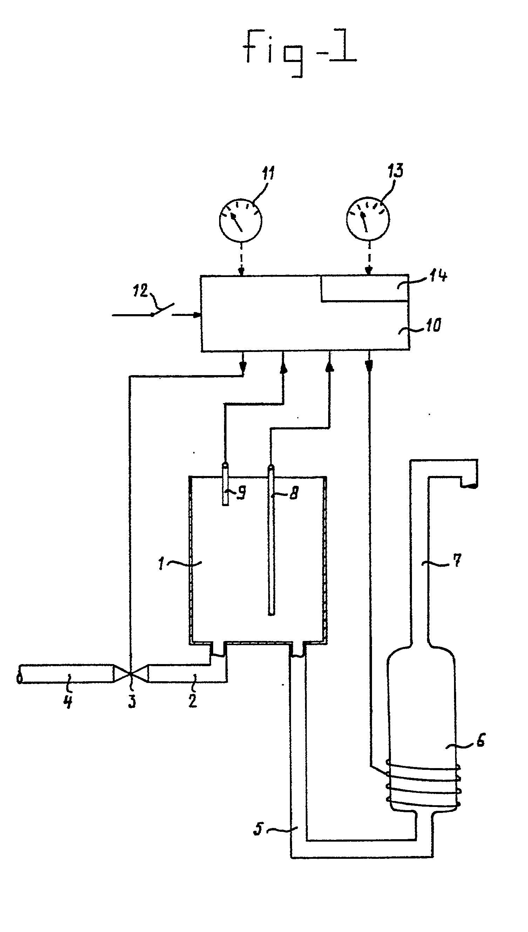

Figure 1 shows diagrammatically a device for delivering hot water according to the invention.

Figure 2 shows a number of time diagrams to explain the operation of different possible embodiments of the device according to the invention.

The device in the figure is provided with a water tank 1 which can be connected via an intake pipe 2 having an intake valve 3 to the water supply, of which only a section 4 is shown. Furthermore, the water tank 1 is connected via a drainage pipe 5 to the input of a continuous-flow heating unit 6, the output of which is connected to a riser 7 which extends to the water delivery point. A minimum level probe 8 and a maximum level probe 9 are disposed in the water tank 1. Furthermore, the device is provided with a control unit 10 which receives signals from the probes 8 and 9, and in addition, receives signals from a batch selector 11, a start switch 12, and a correction adjustment unit 13. The control unit delivers "open" and "closed" signals to the intake valve 3 and switch-on and switch-off signals to the heating unit 6.

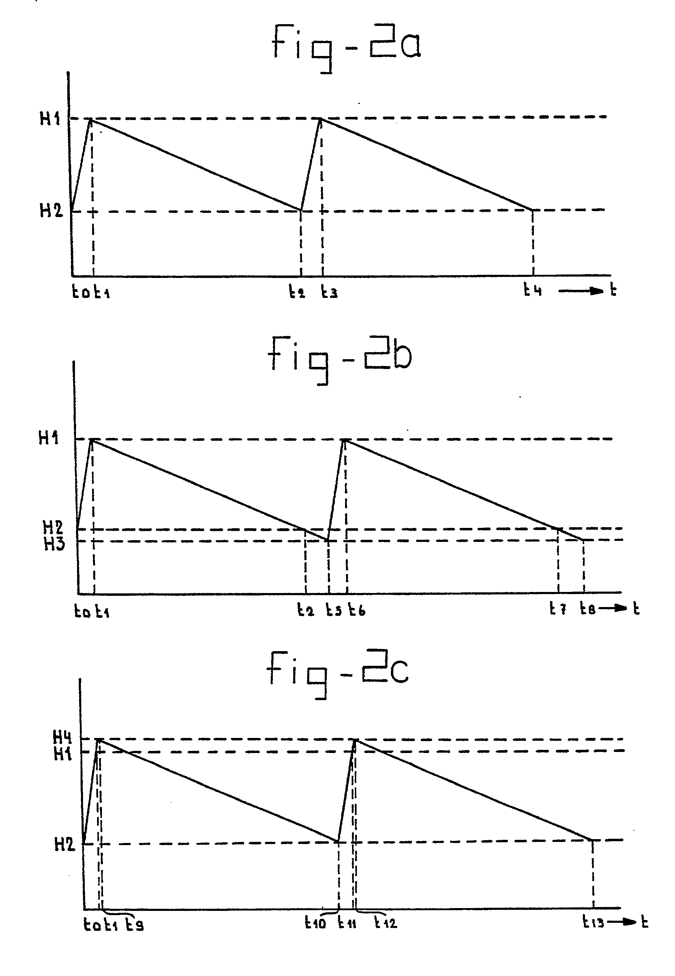

For the next part of the description, reference is also made to Figure 2a. During the uncorrected operation of the device, the desired number of batches is adjusted by the user by means of the selector 11 and the start knob 12 is then pressed. In response to this, the control unit will supply an "open" signal to the intake valve 3 which opened as a result so that between the time instances t0 and t1, the water in the water tank 1 will rise from the minimum level H2 at the probe 8 (the quiescent state of the device) to the maximum level H1 at the level probe 9. As soon as the probe 9 delivers a signal, the intake valve 3 will be closed in response thereto by the control unit. At the same time, the continuous-flow heating system 6 is switched on so that water is heated and the delivery of water frqm the tank 1 via the pipe 5, the continuous-flow heating system 6 and the riser 7 commences, as a result of which the level in the tank starts to fall. If a signal is delivered by the probe 8 when the minimum level H2 is reached at the time instant t2, then, if the control unit 10 detects that the desired number of batches has not.yet been reached, the intake valve 3 is opened again in order to fill the water tank 1 with a next batch of water. At the time instant t3, the tank is again filled to the level H2. After the delivery of the last batch (time instant t4), the intake valve 3 is not opened again and only the continuous-flow heating system 6 is switched off. The water in the water tank 1 then remains situated at the minimum level at the probe 8.

Up to this point, the operation of the device corresponds to the operation of the device described in the abovementioned patent 158,067. For further details reference is made to said patent.

According to the invention, there is now present in the control unit 10, a timer 14 with which a time period can be measured, the duration of which can be selected by the user by means of the correction knob 13. After one of the probes has been reached, said timer 14 provides for a delay in the delivery of control signals over the selected period.

Within this concept there are two possibilities. On the one hand, the delivery of the "close " signal to the intake valve 3 may be delayed after the maximum level probe 9 has been reached. On the other hand, the switch-off signal to the heating unit 6 or the "open" signal to the intake val    ve 3 may be delayed after the minimum level probe 8 has been reached. This last solution is preferable as is explained below on the basis of the figures 2b and 2c.

If the "open" signal to the intake valve 3 is delayed after the minimum level has been reached at the probe 8 as indicated in figure 2b, the delivery of hot water is then continued after the time instant t2 even after the mimimum level has already been passed at the probe 8. At the time instant t5, the adjusted delay period has elapsed, the intake valve 3 is opened and the tank is filled from the level H3 then reached to the level H1 so as then to be able to deliver a subsequent batch. It will be clear that the first batch is increased in proportion to the difference H2 - H3. At the time instant t6, the maximum level H1 has been reached again and the delivery of the next batch starts. If this is the last batch, then, after the delay period between t7 and t8 the intake valve 3 is not opened again at the time instant t8 but only the continuous-flow heating system is switched off. This last batch is then also increased in proportion to the difference H2 - H3.

Between the minimum level probe H2 and the bottom of the tank there is a sufficient volume to still be able to continue to deliver hot water through the heating unit 6 for a defined period while the water level in the tank 1 is simultaneously falling. In general, however, near the bottom of the water tank 1 a further probe (not shown in the figure) will be present and will deliver a signal to the control unit if the water drops below the level of said probe. This so-called boil-dry safety probe provides for the total switch-off of the whole device if the water drops to this extent. The maximum quantity of water with which a batch can be increased is therefore determined by the volume of water between the minimum level H2 at the probe 8 and the level of the boil-dry safety probe situated beneath it.

This correction facility can be used both for a single batch and also for a number of batches (as is illustrated in Figure 2b). Use in the case of a single batch (for example in the case of the last batch alone) has the advantage that the correction is independent in an absolute sense of the selected number of batches. If a certain time duration is adjusted with the knob 13, then during said time duration a certain quantity of water is additionally delivered independently of the number of batches which has been adjusted with the knob 11. In that case the knob 13 could be calibrated in litres. If a relatively large correction facility is required, then the volume between the probe 8 and the boil-dry safety probe will, however, certainly have to be sufficient to implement this correction at one go.

If the correction is carried out in several batches, then only a part of the corrected amount requires to be delivered in each of the batches so that, depending on the actual embodiment, less clear volume is required beneath the level probe 8. A user-friendly embodiment, in which all the batches are corrected, may, for example, be provided with a calculator unit in the control unit 10, which calculator unit determines by means of a simple division based on a number of batches N adjusted with the knob 11 and the time duration T adjusted with the knob 13, what correction period T/N must be used for each batch.

According to the other possibility mentioned above, the "closed" signal to the intake valve 3 is delayed during the filling of the tank 1. Figure 2c illustrates the operation of an embodiment in which this possibility is used. Between t0 and t1, the water tank 1 is filled to the level H1 at which the probe 9 delivers a signal. This signal is delayed by the time unit 14 so that the intake valve 3 is closed only at the time instant t9 when the water has reached the level H4. Then the water delivery starts until at t10 the minimum level H2 is reached. During the filling of the second batch, in this exemplary embodiment the filling process is also prolonged by the period between t11 and t12 so that the tank 1 is again filled to the level H4 above the maximum level indicated by the probe 9. The quantity of water which is delivered in both batches is thus proportional to the difference H4 - H1.

This correction facility can also be implemented in the case of a single batch instead of in several batches (as is illustrated in Figure 2c).

This solution has a number of disadvantages with respect to the preferred solution discussed above. Because the intake valve 3 will in general have a relatively high output (in other words, the filling of the tank 1 takes place relatively rapidly as is also evident from Figure 2) the timer must in this case function over a relatively short period (t1 - t9 or t11 - t12) to carry out a small correction which affects the accuracy. In addition, the water tank 1 above the maximum level at the probe 9 must still have sufficient volume available in order to be able to contain the additional quantity of water. In many existing apparatuses, this additional volume above the maximum level is not present, as a result of which use of the invention within an existing production line is impeded. Furthermore, the water pressure may always vary which leads to the result that with the same time delay the tank is nevertheless filled with different correction amounts.

## Claims

1. Device for delivering hot water in batches, provided with a water tank (1) which can be connected via an intake pipe (2) with intake valve (3) to the water supply and via a discharge pipe (5) is connected to the input of a continuous-flow heating unit (6), the output of which is connected to a riser (7) which extends to the water delivery point, a minimum (8) and a maximum (9) level probe in the water tank, a selector unit for selecting a number of batches and a control unit (11) which, in response to signals delivered by the probes and the selector unit (11), delivers control signals to the continuous-flow heating system for switching the latter on and off cylindrically and delivers cyclically control signals to the intake valve in order to open the intake valve (3) when the minimum level is reached, to close it when the maximum level is reached and then, if the number of batches selected has not yet been reached, to open the intake valve (3) again, characterized in that the control unit (11) is provided with a timer (14) having time adjustment means with which, at least in the case of one of the batches, the delivery of control signals by the control unit (11) is delayed over an adjustable period after one of the probes has been reached.

2. Device according to claim 1 characterized in that the delivery of the "open" signal to the intake valve (3) is delayed when the minimum level probe (8) is reached.

3. Device according to claim 1, characterized in that the delivery of the switch-off signal to the continuous-flow heating system is delayed when the minimum level probe (8) is reached.

4. Device according to claim 2, characterized in that, for each batch except the last batch, the delivery of the "open" signal to the intake valve (3) is delayed when the minimum level probe (8) is reached and in that for the last batch, the delivery of the switch-off signal to the continuous-flow heating system is delayed when the minimum level probe (8) is reached.

5. Device according to claim 1, characterized in that the delivery of the control signal to the intake valve (3) is delayed when the maximum level probe (9) is reached in the case of one or more batches.

6. Device according to one of the preceding claims, characterized in that the control unit (11) is provided with a calculator unit with which the correction period per batch is calculated from the number of selected batches and from the adjusted delay period, the timer functioning for each batch with the calculated correction period per batch.

## Patentansprüche

1. Vorrichtung zur Lieferung von Warmwasser in Ladungen mit einem Wassertank (1), der über ein mit einem Zuleitungsventil (3) versehenen Zuleitungsrohr (2) mit der Wasserzufuhr verbindbar ist und über ein Ableitungsrohr (5) mit der Zuleitung zu einer Durchfluss-Heizeinheit verbunden ist, wobei der Ausgang der Durchfluss-Heizeinheit mit einem bis zur Wasserzapfstelle reichenden Steigrohr (7) verbunden ist, mit einer Mindeststandsonde (8) und einer Höchststandsonde (9) im Wassertank, einer Wahleinheit zum Wählen einer Anzahl von Ladungen und einer Steuereinheit (11), die auf von den Sonden und der Wahleinheit gelieferte Signale antwortet, indem sie dem Durchfluss-Heizsystem Steuersignale liefert, um diesen zyklisch ein- und auszuschalten und dem Zuleitungsventil (3) Steuersignale liefert, um das Zuleitungsventil (3) zu öffnen, wenn der Mindeststand erreicht wird, um es zu schliessen, wenn der Höchststand erreicht wird, und um dann, falls die gewählte Anzahl von Ladungen noch nicht erreicht worden ist, erneut das Zuleitungsventil (3) zu öffnen, dadurch gekennzeichnet, dass die Steuereinheit (11) mit einem Zeitgeber (14) versehen ist, der Zeiteinstellmittel aufweist, mit denen, zumindest im Falle von einer der Ladungen, die Ausgabe von Steuersignalen durch die Steuereinheit über eine einstellbare Zeitdauer verzögert wird, nachdem eine der Sonden erreicht wurde.

2. Vorrichtung nach Anspruch 1, dadurch gekennzeichnet, dass die Ausgabe des Signals "offen" zum Zuleitungsventil verzögert wird, wenn die Mindeststandsonde (8) erreicht wird.

3. Vorrichtung nach Anspruch 1, dadurch gekennzeichnet, dass die Ausgabe des Ausschaltsignals zum Durchfluss-Heizsystem verzögert wird, wenn die Mindeststandsonde (8) erreicht wird.

4. Vorrichtung nach Anspruch 2, dadurch gekennzeichnet, dass, für jede Ladung mit Ausnahme der letzten, die Ausgabe des Signals "offen" zum Zuleitungsventil verzögert wird, wenn die Mindeststandsonde (8) erreicht wird, und für die letzte Ladung die Ausgabe des Ausschaltsignals zum Durchfluss-Heizsystem verzögert wird, wenn die Mindeststandsonde (8) erreicht wird.

5. Vorrichtung nach Anspruch 1, dadurch gekennzeichnet, dass die Ausgabe des Steuersignals zum Zuleitungsventil (3) verzögert wird, wenn im Falle von einer oder mehrerer Ladungen die Höchststandsonde (9) erreicht wird.

6. Vorrichtung nach einem der vorangehenden Ansprüche, dadurch gekennzeichnet, dass die Steuereinheit (11) mit einem Rechner versehen ist, von dem die Korrekturzeitdauer pro Ladung aus der Anzahl von gewählten Ladungen und aus der eingestellten Verzögerungszeitdauer berechnet wird, wobei der Zeitgeber für jede Ladung mit der berechneten Korrekturzeitdauer pro Ladung funktioniert.

## Revendications

1. Dispositif de fourniture d'eau chaude par lots pourvu d'un reservoir d'eau (1) qui peut être relié à l'alimentation en eau par un tube d'amenée (2) muni d'une vanne d'amenée (3) et qui est relié par un tube d'évacuation (5) à l'entrée d'une unité de chauffage à flux continu (6) dont la sortie est reliée à un tube de montée (7) qui s'étend jusqu'au point de fourniture d'eau, d'une sonde de niveau minimum (8) et d'une sonde de niveau maximum (9) dans le reservoir d'eau, d'une unité de choix destinée à choisir un certain nombre de lots et d'une unité de commande (11) qui, en réponse à des signaux fournis par les sondes et l'unité de choix, fournit des signaux de commande au système de chauffage à flux continu pour commuter celui-ci cycliquement entre marche et arrêt et qui fournit des signaux de commande à la vanne d'amenée (3) pour ouvrir la vanne d'amenée (3) lorsque le niveau minimum est atteint, pour la fermer lorsque le niveau maximum est atteint, et ensuite, si le nombre de lots choisi n'a pas encore été atteint, pour ouvrir à nouveau la vanne d'amenée (3), caractérisé en ce que l'unité de commande (11) est pourvue d'un temporisateur (14) comportant des moyens de réglage par lesquels, au moins dans le cas de l'un des lots, la fourniture des signaux de commande par l'unité de commande est retardée d'une durée réglable après que l'une des sondes a été atteinte.

2. Dispositif selon la revendication 1, caractérisé en ce que la fourniture du signal "ouvert" à la vanne d'amenée est retardée lorsque la sonde de niveau minimum (8) est atteinte.

3. Dispositif selon la revendication 1, caractérisé en ce que la fourniture du signal "arrêt" au système de chauffage à flux continu est retardée lorsque la sonde de niveau minimum (8) est atteinte.

4. Dispositif selon la revendication 2, caractérisé en ce que pour chaque lot excepté le dernier lot la fourniture du signal "ouvert" à la vanne d'amenée est retardée lorsque la sonde de niveau minimum (8) est atteinte et que pour le dernier lot la fourniture du signal "arrêt" au système de chauffage à flux continu est retardée lorsque la sonde de niveau minimum (8) est atteinte.

5. Dispositif selon la revendication 1, caractérisé en ce que la fourniture du signal de commande à la vanne d'amenée (3) est retardée lorsque la sonde de niveau maximum (9) est atteinte dans le cas d'un ou plusieurs lots.

6. Dispositif selon une des revendications précédentes, caractérisé en ce que l'unité de commande (11) est pourvue d'une unité de calcul avec laquelle la période de correction par lot est calculée à partir du nombre de lots choisis et de la période de retard réglée, le temporisateur fonctionnant pour chaque lot avec la période de correction par lot calculée.

EP 0 265 008 B1

fig -1

# Fig-2a

# Fig-2b

# Fig-2c